# EUROPÄISCHE PATENTSCHRIFT

(11) **EP 3 466 787 B1**
(45) Veröffentlichungstag und Bekanntmachung des Hinweises auf die Patenterteilung: **05.11.2025**
(21) Anmeldenummer: 18194474.5
(22) Anmeldetag: 14.09.2018
(51) Int. Cl.: B60W 30/18, B60W 30/20, B60W 50/00, B60W 10/02, B60W 10/08

(54) **VERFAHREN UND STEUERVORRICHTUNG ZUM BETRIEB EINES ANTRIEBSSTRANGS EINES KRAFTFAHRZEUGS BEIM ANFAHREN, INSBESONDERE ZUR REDUZIERUNG VON ANTRIEBSSTRANGSCHLÄGEN BEIM ANFAHREN**
METHOD AND CONTROL DEVICE FOR OPERATING A DRIVE TRAIN OF A MOTOR VEHICLE AT DRIVE-OFF, IN PARTICULAR FOR REDUCING DRIVETRAIN SHOCKS DURING DRIVE-OFF
PROCÉDÉ ET DISPOSITIF DE COONTRÔLE D'UNE CHAÎNE CINÉMATIQUE D'UN VÉHICULE AUTOMOBILE LORS DU DÉCOLLAGE, EN PARTICULIER PERMETTANT DE RÉDUIRE LES À-COUPS DE LA CHAÎNE CINÉMATIQUE AU DÉCOLLAGE

(30) Priorität: 09.10.2017 DE 102017123381
(43) Veröffentlichungstag der Anmeldung: 10.04.2019
(73) Patentinhaber: MAN Truck & Bus SE, 80995 München (DE)
(72) Erfinder: Hör, Marc, 82256 Fürstenfeldbruck (DE); Weiner, Martin, 83624 Otterfing (DE)
(74) Vertreter: v. Bezold & Partner Patentanwälte - PartG mbB

(56) Entgegenhaltungen:
- EP-A2- 1 342 610
- DE-A1- 102008 009 201
- DE-A1- 102011 121 422
- US-A1- 2007 197 344

## Beschreibung

Die Erfindung betrifft ein Verfahren zum Betrieb eines Antriebsstrangs eines Kraftfahrzeugs beim Anfahren, insbesondere zur Reduzierung von Antriebsstrangschlägen beim Anfahren. Die Erfindung betrifft ferner eine Steuervorrichtung zum Betrieb eines Antriebsstrangs eines Kraftfahrzeugs. Die Erfindung betrifft ferner ein Kraftfahrzeug, beispielsweise ein Nutzfahrzeug, mit einer derartigen Vorrichtung.

Antriebsstrangschlag entsteht insbesondere beim Anfahren eines Kraftfahrzeugs, insbesondere eines Nutzfahrzeugs. Beim Anhalten und Stehenbleiben eines Kraftfahrzeugs positioniert sich der (geöffnete) Triebstrang auf die Schubseite. Insbesondere bei Nutzfahrzeugen mit ihren vielen Gangstufen kann durch die verschiedenen Verzahnungen im Getriebe des Kraftfahrzeugs, im Allradverteilergetriebe eines Allradfahrzeugs, des Hinterachsdifferentials und ggfs. der Außenplanetenverzahnung der hoch übersetzten Achsen hierbei in Summe ein relativ großes mechanisches Spiel (mechanische Lose) vorhanden sein. Wenn jetzt beispielsweise über eine Kupplung oder einen elektrischen Motor ein Antriebsmoment in den Antriebsstrang eingespeist wird, werden zuerst die mechanischen Lose im Antriebsstrang bzw. dessen Verzahnungen überwunden. Durch die heutige sehr effiziente Auslegung der Komponenten ist insbesondere im betriebswarmen Zustand sehr wenig Drehmoment erforderlich, um die mechanischen Lose zu überwinden. Um ein spontanes Anfahrverhalten zu realisieren, ist ein zügiger Drehmomentaufbau notwendig. Dies kann ohne besondere Maßnahmen, nachdem erst das mechanische Spiel im Antriebsstrang überwunden worden ist, zu einem hörbaren Schlag und insbesondere einen Ruck im Fahrzeug führen.

Das Dokument (US 2007/0197344 A1) offenbart ein Verfahren zum Steuern eines Antriebsstrangs eines Kraftfahrzeugs, um eine Kupplungseinrichtung und einen Antriebsstrang eines Kraftfahrzeugs unter anderem in einer ersten Betriebsart zu betreiben. Dabei soll das Spiel zwischen der Kupplungseinrichtung und dem Antriebsstrang in Drehrichtung der Motorantriebswelle geschlossen werden. Weiterhin offenbart das Dokument (EP 1 342 610 A2) einen Antriebsstrang, bei dem ein Spiel im Antriebsstrang zwischen dem Elektromotor und einem der Räder des Fahrzeuges eliminiert wird.

Dieser Lastwechselschlag beeinträchtigt das subjektive Komfortempfinden des Fahrers und hat eine unerwünschte Energieeinleitung in das Schwingungssystem Motor-Triebstrang-Karosse zur Folge. Lagerungen und Bauteile im Fahrzeug werden hierdurch zusätzlich belastet.

Der Erfindung liegt daher die Aufgabe zugrunde, ein Verfahren und eine Vorrichtung der eingangs genannten Art bereitzustellen, mittels deren Nachteile herkömmlicher Verfahren und Vorrichtungen vermieden werden können, insbesondere mittels welchen ein komfortables und/oder komponentenschonenderes Anfahren des Kraftfahrzeugs möglich ist. Es ist insbesondere eine Aufgabe der Erfindung, ein Verfahren und eine Vorrichtung zum Betrieb eines Antriebsstrangs eines Kraftfahrzeugs beim Anfahren bereitzustellen, mittels deren Antriebsstrangschläge beim Anfahren vermieden oder zumindest reduziert werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein Verfahren zum Betrieb eines Antriebsstrangs eines Kraftfahrzeugs beim Anfahren bereitgestellt, insbesondere ein Verfahren zur Reduzierung von Antriebsstrangschlägen beim Anfahren des Kraftfahrzeugs.

Das Verfahren umfasst eine Vorpositionierung des Antriebsstrangs vor dem Anfahren des Kraftfahrzeugs. Die Vorpositionierung erfolgt durch Einleiten eines Drehmomentimpulses in den Antriebsstrang im Stillstand des Fahrzeugs bei laufendem Motor und eingelegtem Gang. Auf diese Weise kann durch ein gezieltes Einleiten eines Drehmoments in den Antriebsstrang dieser bei stehendem Fahrzeug mit laufendem Motor noch vor dem Anfahren vorpositioniert werden. Die Vorpositionierung entspricht somit einer Ansteuerung des Antriebsstrangs, sodass die mit einem mechanischen Spiel versehenen Verzahnungen im Antriebsstrang unter Überwindung der mechanischen Lose von der "Schubseite" auf die "Zugseite" übergehen.

Unter einer "Zugseite" soll dabei insbesondere eine Seite eines Zahns einer solchen Verzahnung verstanden werden, die bei einer Drehmomentübertragung in einem Zugbetrieb mit einer Flächenpressung beaufschlagt ist. Demgegenüber soll unter einer "Schubseite" insbesondere eine Seite verstanden werden, die in dem Zugbetrieb bei einer Drehmomentübertragung unbelastet ist. Unter einem "Zugbetrieb" soll dabei insbesondere ein Betriebsmodus verstanden werden, bei dem der Kraftfahrzeugantriebsstrang ein von einer Antriebsmaschine, wie beispielsweise einer Brennkraftmaschine, abgegebenes Moment überträgt. Unter einer Vorpositionierung des Antriebsstrangs wird somit verstanden, dass der Antriebsstrang vor dem eigentlichen Anfahrvorgang in einen Zustand bzw. in eine definierte Position gebracht wird, in dem/der sich die Verzahnungen im Antriebsstrang nach der Überwindung des mechanischen Spiels auf der Zugseite befinden. Unter einem Drehmomentimpuls wird eine pulsartige Drehmomenteinleitung verstanden

Der Antriebsstrang wird somit nach dem Anhalten und Stehenbleiben des Kraftfahrzeugs vor dem Anfahren mittels einer pulsartigen Drehmomenteinleitung (Drehmomentimpuls) in eine definierte Position gebracht, in der sich die Verzahnungen im Antriebsstrang auf der Zugseite befinden Wenn dann anschließend zur Erzeugung der Anfahrbewegung ein hohes Antriebsmoment (hoher Momentgradient) in den Antriebsstrang eingeleitet wird, müssen keine mechanischen Lose mehr überwunden werden. Somit können keine Triebstrangschläge und kein störendes Rucken auftreten. Der erfindungsgemäß eingeleitete Drehmomentimpuls dient somit nicht zur Erzeugung einer Anfahrbewegung des Kraftfahrzeugs, sondern dient lediglich zur Überwindung der mechanischen Spiele im Antriebsstrang des Kraftfahrzeugs. Der Drehmomentimpuls ist ferner dem Drehmoment, das zur Erzeugung der Anfahrbewegung in den Antriebsstrang eingeleitet wird, zeitlich vorgelagert. Der Drehmomentimpuls zur Vorpositionierung ist betragsmäßig kleiner als das nachfolgend eingeleitete Drehmoment für die Anfahrbewegung, da im Rahmen der Vorpositionierung "nur" die mechanischen Spiele im Antriebsstrang überwunden werden müssen und ferner bei der Vorpositionierung gerade keine Anfahrbewegung der Räder erzeugt werden soll. Das Anfahren des Fahrzeugs erfolgt somit unmittelbar, da nicht erst das Verdrehspiel überwunden werden muss.

Der Begriff "Drehmomentimpuls" wird hier verwendet, da der zeitliche Verlauf des erzeugten Drehmoments zur Vorpositionierung pulsartig ist, d. h., er steigt schnell auf einen Zielwert an und fällt nach kurzem Halten des Zielwerts wieder ab, vorzugsweise auf null. Die Dauer des eingeleiteten Drehmoments zur Vorpositionierung ist vergleichsweise kurz.

Gemäß einem vorteilhaften Aspekt ist hierbei der zur Vorpositionierung erzeugte Drehmomentimpuls vorzugsweise derart dimensioniert, dass durch dessen Einleitung ein mechanisches Spiel, d. h. mechanische Lose, im Antriebsstrang überwunden wird. Der zur Vorpositionierung erzeugte Drehmomentimpuls ist vorzugsweise ferner derart dimensioniert, dass der Drehmomentimpuls keine Vorwärtsbewegung des Kraftfahrzeugs erzeugt. Unter der Dimensionierung des Drehmomentimpulses wird die Festlegung der Höhe und Dauer des Drehmomentimpulses verstanden. Die Höhe des Drehmomentimpulses ist somit mindestens so gewählt, dass dadurch die erforderliche Kraft aufgebracht wird, die vonnöten ist, damit sich die Verzahnungen von der Schubseite hin zur Zugseite hin bewegen, und somit ausreichend groß ist, um die mechanischen Lose im Antriebsstrang überwinden zu können. Die Dauer des Drehmomentimpulses ist mindestens so lang gewählt, dass der Drehmomentimpuls ausreichend lange anliegt, damit die mechanischen Lose auch vollständig durchlaufen und damit überwunden werden und die Verzahnung in der gewünschten Position verharrt.

Diese Dimensionierung des Drehmomentimpulses, d. h. die Höhe und Dauer des Drehmomentimpulses, kann für jeden Antriebsstrang für verschiedene Betriebsparameter beispielsweise empirisch im Rahmen von Versuchen bestimmt werden.

Gemäß einem weiteren Aspekt kann das Verfahren den Schritt umfassen: nach Beendigung des Drehmomentimpulses zur Vorpositionierung Einleiten eines Drehmoments in den Antriebsstrang zur Erzeugung einer Anfahrbewegung des Kraftfahrzeugs. Gemäß diesem Aspekt wird nochmals deutlich, dass zur Vermeidung von Antriebsstrangschlägen eine separate, dem Anfahrvorgang zeitlich vorgelagerte Drehmomenteinsteuerung vorgesehen ist. Zwischen dem Drehmomentimpuls zur Vorpositionierung und bis zur Einleitung des Drehmoments zur Zeugung der Anfahrbewegung existiert somit vorzugsweise eine kurze Unterbrechungsphase, in der kein Drehmoment in den Antriebsstrang eingeleitet wird. Es wird jedoch festgestellt, dass anschließend nicht zwingend eine Anfahrbewegung erfolgen muss.

Gemäß einer bevorzugten Ausführungsform kann die Vorpositionierung nach jedem Anhalten des Kraftfahrzeugs, sobald Fahrzeugstillstand erreicht ist und ein Gang eingelegt ist, durchgeführt werden. Wie eingangs bereits erwähnt wurde, positioniert sich beim Anhalten und Stehenbleiben des Fahrzeugs der (geöffnete) Triebstrang auf die Schubseite, sodass eine anschließende Vorpositionierung des Triebstrangs Schläge und Ruckeln beim Anfahren vermeidet.

Gemäß einer weiteren bevorzugten Ausführungsform kann die Vorpositionierung nach jedem Gangwechsel im Stillstand durchgeführt werden, da hier undefinierte Antriebsstrangstellungen entstehen können, beispielsweise Zahn-auf-Zahn-Auflösung eines unsynchronisierten Getriebes.

Gemäß einer weiteren bevorzugten Ausführungsform kann die Vorpositionierung beim Schalten von Neutral in einen Vorwärts- oder Rückwärtsgang im Stillstand durchgeführt werden, da hier undefinierte Antriebsstrangstellungen entstehen können. Unter dem Begriff "Neutral" wird die Gangstufe "N": Neutral (Leerlauf) verstanden.

Gemäß einer weiteren bevorzugten Ausführungsform kann die Vorpositionierung nur im betriebswarmen Zustand des Antriebsstrangs durchgeführt werden. Mit anderen Worten wird bei Vorliegen eines kalten Antriebsstrangs, z. B. Anfahren nach dem Kaltstart, keine Vorpositionierung durchgeführt. Bei kaltem Antriebsstrang ist es bedingt durch die höhere Reibung und Schmiermittel-Viskosität im Antriebsstrang nicht notwendig, den erfindungsgemäßen Mechanismus zur Vorpositionierung zu aktivieren. Als Kriterium für das Vorliegen eines betriebswarmen Zustands des Antriebsstrangs kann das Überschreiten einer vorbestimmten Schwellentemperatur des Antriebsstrangs herangezogen werden.

Erfindungsgemäß umfasst das Verfahren, dass eine Höhe und/oder einer Dauer des Drehmomentimpulses in Abhängigkeit von einer eingelegten Gangstufe bestimmt wird. Dieser Ausführungsform liegt die technische Erkenntnis zugrunde, dass es vorteilhaft ist, die Höhe und/oder die Dauer des Drehmomentimpulses in Abhängigkeit vom gewählten Gang (Gangstufe) anzupassen, um zu verhindern das die Vorpositionierung des Antriebsstrangs nicht selbst zu dem Ruck und Schlag im Fahrzeug führt, das dadurch gerade verhindert werden soll. Insbesondere im ersten Gang könnte die Vorpositionierung, wenn die Dauer und/oder Höhe des Drehmomentimpulses zu groß gewählt ist, im schlechtesten Fall eine kurze Vorwärtsbewegung des Fahrzeugs erzeugen. Entsprechend kann beispielsweise experimentell für jede Gangstufe eine zweckmäßig gewählte Höhe und/oder Dauer des Drehmomentimpulses ermittelt werden, derart, dass eine Überwindung der mechanischen Lose ermöglicht wird - ohne dabei Antriebsstrangschlag, Ruck oder Fahrzeugbewegung zu erzeugen.

Alternativ oder zusätzlich zu der Bestimmung einer Höhe und/oder einer Dauer des Drehmomentimpulses in Abhängigkeit von einer eingelegten Gangstufe wird eine Höhe und/oder Dauer des Drehmomentimpulses erfindungsgemäß in Abhängigkeit von zumindest einem der folgenden Parameter bestimmt: einer Masse (Gewicht) des Kraftfahrzeugs, einer Temperatur des Antriebsstrangs, einem Vorliegen oder Nichtvorliegen einer Bremspedalbetätigung oder Vorliegen bzw. Nichtvorliegen einer eingelegten Feststellbremse.

Gemäß einem weiteren vorteilhaften Aspekt kann daher vorgesehen sein, dass die Vorpositionierung bei eingelegtem z. B. ersten Gang nur durchgeführt wird, falls die momentane Fahrzeugmasse einen vorbestimmten Schwellenwert überschreitet und/oder ein Bremspedal oder eine Bremse betätigt ist.

Je höher eine Masse des Fahrzeugs, desto geringer das Risiko, dass sich das Kraftfahrzeug bei der Vorpositionierung in Bewegung setzt. Entsprechend kann bei hohen Fahrzeugmassen die Höhe und/oder Dauer des Drehmomentimpulses entsprechend größer gewählt werden. Diese Variante ist gerade bei Nutzfahrzeugen wie Lastkraftwagen sehr vorteilhaft, da deren Fahrzeuggewicht je nach Beladungszustand starken Schwankungen unterworfen ist. In vielen Nutzfahrzeugen wird das momentane Fahrzeuggewicht unmittelbar oder mittelbar sensorisch erfasst und kann somit als Parameter für die Dimensionierung des Drehmomentimpulses auf einfache Weise herangezogen werden.

Entsprechendes gilt umgekehrt für die Temperatur des Antriebsstrangs, je kälter der Antriebsstrang, desto höher die vorliegende Reibung, desto geringer das Risiko, dass sich das Kraftfahrzeug bei der Vorpositionierung in Bewegung setzt. Bei Vorliegen einer Bremspedalbetätigung kann beispielsweise darauf geschlossen werden, dass kein Risiko besteht, dass sich das Kraftfahrzeug bei der Vorpositionierung in Bewegung setzt.

Eine Weiterbildung des Verfahrens kann ferner die Schritte umfassen: Vorhersage, ob eine Vorpositionierung des Antriebsstrangs mittels der bestimmten Höhe und/oder Dauer des Drehmomentimpulses zu einer Fahrzeugbewegung, einem Ruck und/oder Triebstrangschlag, insbesondere zu einer für den Fahrer wahrnehmbaren Fahrzeugbewegung, einem Ruck und/oder Triebstrangschlag führen würde.

Wird gemäß dieser Weiterbildung vorhergesagt, d. h. abgeschätzt, dass eine Vorpositionierung des Antriebsstrangs mittels der bestimmten Höhe und/oder Dauer des Drehmomentimpulses zu einer Fahrzeugbewegung, einem Ruck und/oder Triebstrangschlag führen würde, erfolgt keine Durchführung der Vorpositionierung vor dem Anfahren, andernfalls erfolgt eine Durchführung der Vorpositionierung vor dem Anfahren.

Diese Vorhersage kann unter Berücksichtigung zumindest einer der folgenden Parameter erfolgen: der momentanen Gangstufe, einer Masse des Kraftfahrzeugs, einer Temperatur des Antriebsstrangs, sowie einem Vorliegen oder Nichtvorliegen einer Bremspedalbetätigung. Vorstehend wurde bereits erwähnt, dass die aktuellen Werte dieser Parameter maßgeblich beeinflussen, ab welcher Höhe und/oder Dauer ein eingesteuerter Drehmomentimpuls voraussichtlich zu einer Fahrzeugbewegung, einem Ruck und/oder Triebstrangschlag führen wird. Eine Vorhersage, ob eine Vorpositionierung des Antriebsstrangs mittels der bestimmten Höhe und/oder Dauer des Drehmomentimpulses zu einer Fahrzeugbewegung, einem Ruck und/oder Triebstrangschlag, insbesondere zu einer für den Fahrer wahrnehmbaren Fahrzeugbewegung, einem Ruck und/oder Triebstrangschlag führen würde, kann beispielsweise durch Bestimmung bzw. Abschätzung einer Wahrscheinlichkeit erfolgen, die ein Maß dafür angibt, dass die Vorpositionierung zu einer für den Fahrer wahrnehmbaren Fahrzeugbewegung, einem Ruck und/oder Triebstrangschlag führen würde. Ein entsprechendes Modell oder ein funktionaler Zusammenhang für die Bestimmung der Wahrscheinlichkeit kann anhand eines vorab experimentell auf einem Prüfstand bestimmten und im Kraftfahrzeug hinterlegten Modells ermittelt werden.

Das Einleiten des Drehmomentimpulses bei der Vorpositionierung kann mittels einer Kupplungseinrichtung, z. B. der Fahrkupplung, erfolgen, die als eine zwischen Antriebsmotor und Getriebe angeordnete automatisierte Kupplung ausgeführt sein kann. Das Einleiten des Drehmomentimpulses bei der Vorpositionierung kann ferner mittels eines elektrischen Motors erfolgen. Der elektrische Motor kann ein Antriebsmotor eines rein elektrisch angetriebenen Fahrzeugs oder eines Hybridfahrzeugs sein. Bei einem Hybridfahrzeug kann der elektrische Motor zum Einleiten des Drehmomentimpulses am Getriebeeingang angeordnet sein.

Erfindungsgemäß weist der Drehmomentimpuls eine Anstiegsflanke auf, mit einem steilen ersten Abschnitt und einem nachfolgenden, im Vergleich zum ersten Abschnitt weniger steilen zweiten Abschnitt. Gemäß einer Variante kann ein Ende des ersten Abschnitts einem Drehmoment entsprechen, das kleiner als ein Mindestdrehmoment ist, welches erforderlich ist, um eine Umpositionierung des Antriebsstrangs von der Schubseite auf die Zugseite auszulösen. Der erste Abschnitt ist vorzugsweise somit so gewählt, dass mit diesem ein Drehmoment erzielt wird, das etwas unterhalb desjenigen Drehmomentwertes liegt, das für eine Umpositionierung der Zahnflanken zum Durchlaufen der mechanischen Lose mindestens aufgebracht werden muss. Das Ende des ersten Abschnitts kann höchstens um 30 %, weiter vorzugsweise um höchsten 20 %, weiter vorzugsweise um höchstens 10 % unterhalb des vorgenannten Mindestdrehmoments liegen.

Der erste Abschnitt ermöglicht somit einen schnellen Aufbau des Drehmomentimpulses bis zu einem Wert kurz unterhalb einer kritischen Grenze, ab der ein Risiko für das Auslösen von Antriebsstrangschlägen besteht, gefolgt von einem im Vergleich hierzu langsameren Anfahren des gewünschten Zielwerts des Drehmomentimpulses. Die vorgenannten Varianten bieten über den gestuften Aufbau des Drehmomentimpulses somit den Vorzug, dass damit ein schneller Aufbau des Drehmoments zur Vorpositionierung ermöglicht wird, wobei gleichzeitig das Risiko von unerwünschten Antriebsstrangschlägen vermieden wird.

An den zweiten Abschnitt der Anstiegsflanke des Drehmomentimpulses kann sich ein dritter Abschnitt anschließen, in dem die Höhe des Drehmomentimpulses konstant oder im Wesentlichen konstant verläuft, wobei die Höhe dem gewünschten Zielwert des Drehmomentimpulses entspricht. Dem dritten Abschnitt kann sich dann eine Abstiegsflanke (vierter Abschnitt) anschließen, die bewirkt, dass der Drehmomentimpuls steil auf null abfällt.

Gemäß einem zweiten allgemeinen Gesichtspunkt der Erfindung wird eine Steuervorrichtung zum Betrieb eines Antriebsstrangs eines Kraftfahrzeugs beim Anfahren bereitgestellt, insbesondere zur Reduzierung von Antriebsstrangschlägen beim Anfahren des Kraftfahrzeugs. Die Steuervorrichtung zeichnet sich dadurch aus, dass diese ausgebildet ist, das Verfahren wie in diesem Dokument beschrieben durchzuführen.

Zur Vermeidung von Wiederholungen sollen rein verfahrensgemäß offenbarte Merkmale auch als vorrichtungsgemäß offenbart gelten und beanspruchbar sein und vice versa. Die vorgenannten Merkmale betreffen die unterschiedlichen Ausführungsformen zur Ausgestaltung des Verfahrens sollen somit auch als entsprechende funktionale Merkmalender Steuerung offenbart gelten.

Die Erfindung betrifft ferner ein Kraftfahrzeug mit einer solchen Steuervorrichtung zum Betrieb eines Antriebsstrangs. Das Kraftfahrzeug kann ein Nutzfahrzeug sein, beispielsweise ein Lastkraftwagen oder ein Omnibus. Das Kraftfahrzeug kann rein verbrennungsmotorisch, rein elektrisch oder als Hybridfahrzeug, z. B. als Fahrzeug mit einem sekundärseitigen Hybridmotor, d. h. einem Motor am Getriebeeingang, ausgeführt sein.

Die zuvor beschriebenen bevorzugten Ausführungsformen und Merkmale der Erfindung sind im Rahmen der beigefügten Ansprüche beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Ablaufdiagramm zur Illustration eines Verfahrens zum Betrieb eines Antriebsstrangs gemäß einer Ausführungsform der Erfindung;
- Figur 2: ein Diagramm zur Illustration eines zeitlichen Verlaufs einer Fahrzeuggeschwindigkeit und eines korrespondierenden zeitlichen Verlaufs des erzeugten Drehmoments während der Vorpositionierung des Antriebsstrangs gemäß einer Ausführungsform der Erfindung; und
- Figur 3: ein Blockdiagramm zur stark schematischen Darstellung eines Kraftfahrzeugs mit einer Steuervorrichtung zum Betrieb des Antriebsstrangs und mit einer Vorrichtung gemäß einer Ausführungsform der Erfindung.

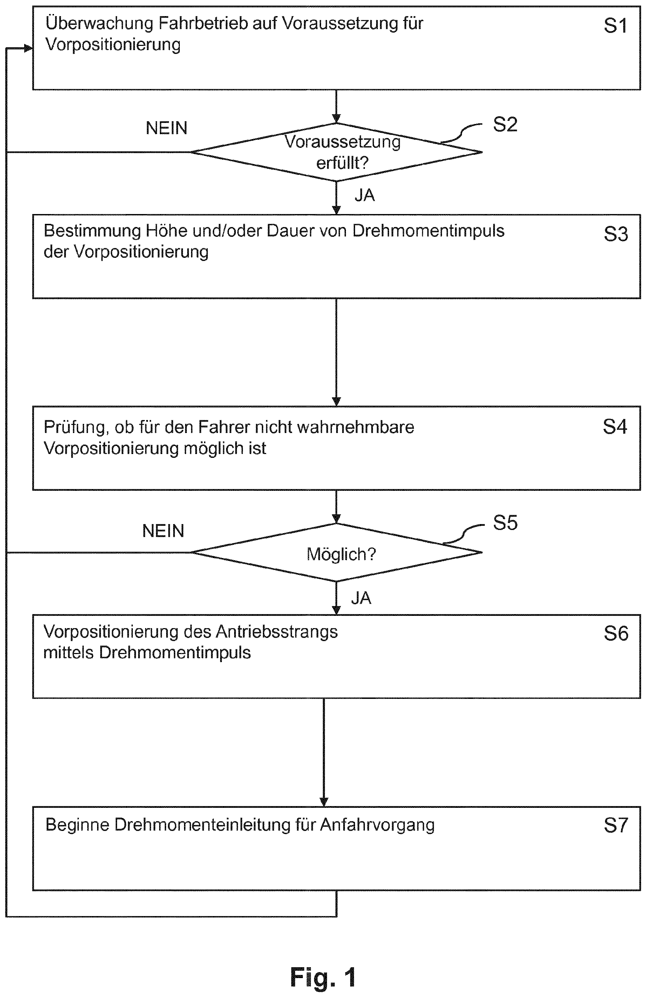

Figur 1 zeigt ein schematisches Ablaufdiagramm zur Illustration eines Verfahrens zum Betrieb eines Antriebsstrangs gemäß einer Ausführungsform der Erfindung. Das Kraftfahrzeug kann ein Nutzfahrzeug sein, beispielsweise ein Lastkraftwagen oder ein Omnibus.

Das Verfahren umfasst eine Vorpositionierung des Antriebsstrangs vor dem Anfahren des Kraftfahrzeugs. Die Vorpositionierung erfolgt durch Einleiten eines Drehmomentimpulses in den Antriebsstrang im Stillstand des Fahrzeugs bei laufendem Motor und eingelegtem Gang.

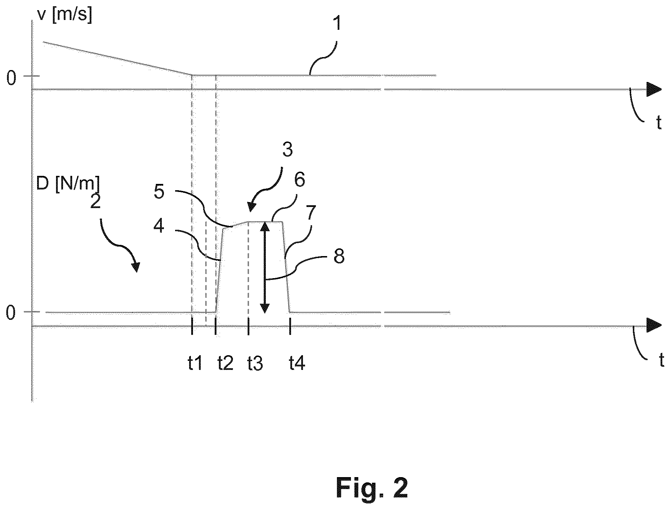

Da die Vorpositionierung nur im Stillstand des Fahrzeugs bei laufendem Motor und eingelegtem Gang vorgenommen wird, wird der Fahrbetrieb des Fahrzeugs auf entsprechend geeignete Betriebssituationen überwacht, in denen diese Voraussetzung(en) erfüllt ist/sind. Entsprechend wird gemäß Schritt S1 der in Figur 1 dargestellten beispielhaften Ausführungsform des Verfahrens der Fahrbetrieb auf das Vorliegen dieser Voraussetzungen hin überwacht, nämlich ob das Fahrzeug einen Stillstand erreicht hat, der Motor läuft und ein Gang eingelegt ist bzw. wurde. Dies ist ferner in Figur 2 illustriert. Im oberen Teildiagramm der Figur 2 ist der zeitliche Verlauf der Fahrgeschwindigkeit v dargestellt. Im Zeitpunkt t1 ist die Fahrgeschwindigkeit auf 0 gefallen. Diese Voraussetzung für eine Vorpositionierung ist erfüllt.

Ergibt die diesbezügliche Prüfung, dass die Voraussetzung(en) zur Durchführung einer Vorpositionierung gegeben ist/sind ("JA" als Prüfergebnis in Schritt S2), wird anschließend in Schritt S3 eine Höhe und/ oder eine Dauer des Drehmomentimpulses für die Vorpositionierung bestimmt. Alternativ kann die Höhe auch fest vorgegeben sein.

Beispielsweise kann die Höhe und/oder Dauer des Drehmomentimpulses in Abhängigkeit von der eingelegten Gangstufe bestimmt werden. Dies ist besonders bei Nutzfahrzeugen wichtig, wo neben dem ersten Gang auch weitere Gänge zum Anfahren benutzt werden, wie beispielsweise ein Rangiergang. Höhere Gänge sind generell unkritischer, was das Risiko angeht, dass durch die Vorpositionierung selbst ein Ruck oder Schlag im Fahrzeug erzeugt wird. Es kann z. B. vorgesehen sein, dass die Vorpositionierung bei eingelegtem ersten Gang nur durchgeführt wird, falls die momentane Fahrzeugmasse einen vorbestimmten Schwellenwert überschreitet und/oder ein Bremspedal betätigt ist.

Ferner können Höhe und/oder Dauer des Drehmomentimpulses in Abhängigkeit von einer Masse (Gewicht) des Kraftfahrzeugs, einer Temperatur des Antriebsstrangs und einem Vorliegen oder Nichtvorliegen einer Bremspedalbetätigung festgelegt werden.

Anschließend kann optional im Schritt S4 geprüft werden, ob basierend auf der bestimmten Höhe und/Dauer des Drehmomentimpulses eine für den Fahrer nicht wahrnehmbare Vorpositionierung des Antriebsstrangs durchgeführt werden kann. Dies bedeutet, dass bei der Vorpositionierung nur solche leichten Antriebsstrangschläge oder Rucke erzeugt werden dürfen, die für den Fahrer nicht wahrnehmbar sind. Diese Vorhersage kann unter Berücksichtigung zumindest einer der folgenden Parameter erfolgen: der momentanen Gangstufe, einer Masse des Kraftfahrzeugs, einer Temperatur des Antriebsstrangs sowie einem Vorliegen oder Nichtvorliegen einer Bremspedalbetätigung. Vorstehend wurde bereits erwähnt, dass die aktuellen Werte dieser Parameter maßgeblich beeinflussen, ab welcher Höhe und/oder Dauer ein eingesteuerter Drehmomentimpuls voraussichtlich zu einer Fahrzeugbewegung, einem Ruck und/oder Triebstrangschlag führen wird.

Ein weiterer Faktor, der in die Prüfung in Schritt S4 miteinbezogen werden kann, ist folgender: Bei Einsteuerung des Drehmoments zur Vorpositionierung über einen Kupplungsteller ist dieser beispielsweise in seiner Positioniergenauigkeit, insbesondere im drehmomentfreien Bereich sowie bei sehr kleinen Momenten, stark abhängig davon, wie lange beispielsweise die letzte Kupplungsadaptionsroutine her ist. Dies kann dazu führen, dass anstelle von z. B. 5 Nm auch gelegentlich 10 Nm oder mehr übertragen werden. Das Risiko, dass die Vorpositionierung zu einem für den Fahrer wahrnehmbaren Triebstrangschlag führt, sinkt ferner mit abnehmender Temperatur des Antriebsstrangs und sinkt mit höheren Gangstufen.

Wird gemäß dieser Weiterbildung vorhergesagt, d. h. abgeschätzt, dass eine Vorpositionierung des Antriebsstrangs mittels der bestimmten Höhe und/oder Dauer des Drehmomentimpulses zu einer Fahrzeugbewegung, einem Ruck und/oder Triebstrangschlag führen würde, erfolgt keine Durchführung der Vorpositionierung vor dem Anfahren ("NEIN" in Schritt S5), andernfalls erfolgt eine Durchführung der Vorpositionierung vor dem Anfahren ("JA" in Schritt S5) in Schritt S6 mittels Einleitung des Drehmomentimpulses.

Durch entsprechende Ansteuerung des Kupplungstellers durch eine Steuervorrichtung wird ein Drehmomentimpuls gemäß der bestimmten Höhe und Dauer in den Antriebsstrang eingeleitet, im Stillstand des Fahrzeugs bei laufendem Motor und eingelegtem Gang. Der Drehmomentimpuls 3 ist im unteren Teildiagramm der Figur 2 dargestellt, das den zeitlichen Verlauf des in den Antriebsstrang eingesteuerten Drehmoments 2 zur Durchführung der Vorpositionierung des Antriebsstrangs zeigt. Die Einleitung des Drehmomentimpulses 3 beginnt zum Zeitpunkt t2, kurz nachdem das Kraftfahrzeug im Zeitpunkt t1 zum Stillstand gekommen ist.

Der Drehmomentimpuls weist eine Anstiegsflanke auf, mit einem steilen ersten Abschnitt 4 und einem nachfolgenden, im Vergleich zum ersten Abschnitt weniger steilen zweiten Abschnitt 5.

Mit dem ersten Abschnitt 4 erfolgt eine Erhöhung des Drehmoments auf einen für das Umpositionieren des Antriebsstrangs beinahe ausreichenden Wert. Anschließend erfolgt im zweiten Abschnitt 5 der Anstiegsflanke das langsame Erreichen des gewünschten Zielwerts 8, entsprechend der Höhe des Drehmomentimpulses. Nach Erreichen des Zielwerts zum Zeitpunkt t3 wird dieser für eine vorbestimmte Zeitdauer gehalten (Abschnitt 6 des Drehmomentimpulses), die ausreichend lang sein muss, damit sich der Triebstrang von der Schubposition in die Zugposition umpositionieren kann, d. h., die den mechanischen Losen (Spiel) ausgesetzten Zahnflanken positionieren sich von ihrer Schubposition in die Zugposition um. Anschließend fällt der Drehzahlimpuls mit der Abfallflanke 7 steil ab bis auf den Wert 0 im Zeitpunkt t4. Der eingesteuerte Drehimpuls 6 hat somit eine Ähnlichkeit mit einem Rechteck-Impuls, wobei die obere Flanke 5, 6 im vorderen Teil aufgrund des Abschnitts 5 etwas nach unten abgeknickt ist.

Während des gesamten Zeitpunkts der Einsteuerung des Drehmomentimpulses befindet sich das Fahrzeug im Stillstand.

Erst anschließend beginnt der eigentliche Anfahrvorgang, bei dem ein Antriebsdrehmoment in den Antriebsstrang eingeleitet wird, das im Gegensatz zum eingesteuerten Drehmoment bei der Vorpositionierung nicht pulsartig ist und das betragsmäßig höher ist als der Drehmomentimpuls 3. Dieses nachfolgende Einleiten des Antriebsdrehmoments zur Zeugung der Anfahrbewegung ist in Figur 2 nicht mehr dargestellt. Unter Einwirkung dieses eingeleiteten Drehmoments setzt sich das Fahrzeug in Bewegung. Da hierbei alle Zahnflanken im Antriebsstrang bereits durch die Vorpositionierung in Zugposition gebracht wurden, erfolgt auch bei einem steilen Anstieg des Antriebsdrehmoments kein Antriebsstrangschlag und kein Ruck. Ein komfortables Anfahren für den Fahrer ist gewährleistet.

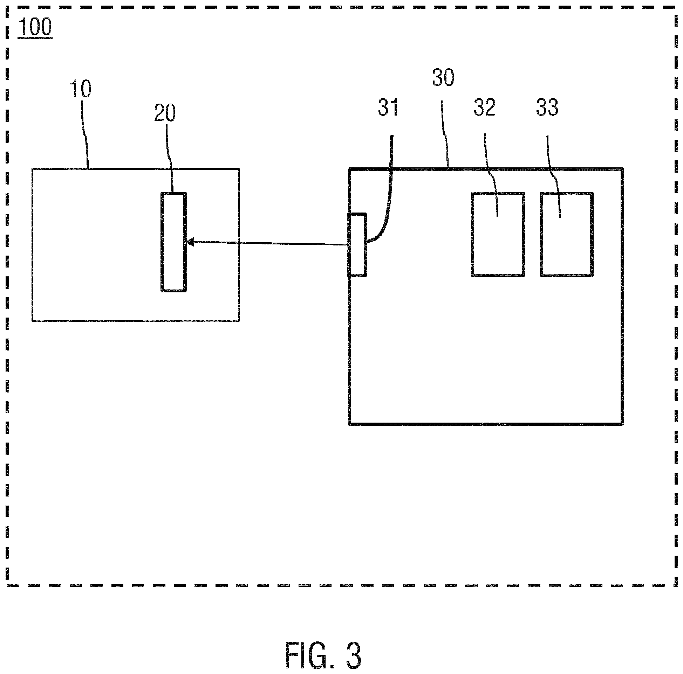

Figur 3 zeigt ein Blockdiagramm zur stark schematisierten Darstellung eines Kraftfahrzeugs 100 mit einer Steuervorrichtung 30 zum Betrieb des Antriebsstrangs 10. Die Steuervorrichtung 30 ist programmtechnisch eingerichtet, das Verfahren, wie vorstehend beispielsweise in Zusammenhang mit den Figuren 1 und 2 beschrieben, durchzuführen. Hierzu kann die Steuervorrichtung einen Prozessor 32 und einen Speicher 33 aufweisen, in denen die programmtechnischen Anweisungen zur Durchführung des Verfahrens ausgeführt und hinterlegt sind. Die entsprechenden Steuersignale zur Ansteuerung einer Kupplungseinrichtung 20 werden über eine Schnittstelleneinheit 31 ausgegeben. Die Kupplungseinrichtung 20 ist eine automatisiert ansteuerbare Kupplung mit einem Kupplungssteller und ist zwischen dem Getriebe des Antriebsstrangs 10 und der Brennkraftmaschine des Antriebsstrangs 10 angeordnet. Das Kraftfahrzeug 100, der Antriebsstrang 10 und die Kupplungseinrichtung 20 können in an sich bekannter Weise ausgeführt sein und sind daher vorliegend nur stark schematisiert dargestellt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeuggeschwindigkeit
- 2: In den Antriebsstrang eingeleitetes Drehmoment
- 3: Drehmomentimpuls
- 4: Erster Abschnitt der Anstiegsflanke des Drehmomentimpulses
- 5: Zweiter Abschnitt der Anstiegsflanke des Drehmomentimpulses
- 6: Zielwert/Höhe des Drehmomentimpulses
- 7: Abfallflanke des Drehmomentimpulses
- 8: Zielwert/Höhe des Drehmomentimpulses
- 10: Antriebsstrang
- 20: Kupplung
- 30: Steuervorrichtung
- 31: Schnittstelle
- 32: Prozessor
- 33: Speicher

## Patentansprüche

1. Verfahren zum Betrieb eines Antriebsstrangs eines Kraftfahrzeugs beim Anfahren, insbesondere zur Reduzierung von Antriebsstrangschlägen beim Anfahren eines Kraftfahrzeugs, umfassend die folgenden Schritte:
- Vorpositionierung (S6) des Antriebsstrangs (10) vor dem Anfahren des Kraftfahrzeugs durch Einleiten eines Drehmomentimpulses (3) in den Antriebsstrang (10) im Stillstand des Fahrzeugs bei laufendem Motor und eingelegtem Gang, und
- Bestimmung (S3)
einer Höhe (8) und/oder einer Dauer des Drehmomentimpulses in Abhängigkeit
a) von einer eingelegten Gangstufe;
und/oder
b) von zumindest einem der folgenden Parameter: einer Masse des Kraftfahrzeugs, einer Temperatur des Antriebsstrangs, einem Vorliegen oder Nichtvorliegen einer Bremspedalbetätigung und/oder einem Vorliegen oder Nichtvorliegen einer eingelegten Feststellbremse,
**dadurch gekennzeichnet, dass** der Drehmomentimpuls (3) eine Anstiegsflanke (4, 5) aufweist, mit einem steilen ersten Abschnitt (4) und einem nachfolgenden, im Vergleich zum ersten Abschnitt (4) weniger steilen zweiten Abschnitt (5).

2. Verfahren nach Anspruch 1, wobei der Drehmomentimpuls (3) derart dimensioniert ist, dass durch dessen Einleitung mechanisches Spiel im Antriebsstrang überwunden wird und/oder dass der Drehmomentimpuls keine Vorwärtsbewegung des Kraftfahrzeugs erzeugt.

3. Verfahren nach Anspruch 1 oder 2, ferner umfassend den Schritt:
nach Beendigung des Drehmomentimpulses, Einleiten (S7) eines Drehmoments in den Antriebsstrang zur Erzeugung einer Anfahrbewegung des Kraftfahrzeugs.

4. Verfahren nach einem der vorhergehenden Ansprüche, wobei die Vorpositionierung durchgeführt wird:
a) nach jedem Anhalten des Kraftfahrzeugs, sobald Fahrzeugstillstand erreicht ist und ein Gang eingelegt ist; und/oder
b) nach jedem Gangwechsel im Stillstand; und/oder
c) beim Schalten von Neutral in einen Vorwärts- oder Rückwärtsgang im Stillstand.

5. Verfahren nach einem der vorhergehenden Ansprüche, wobei die Vorpositionierung (S6) nur im betriebswarmen Zustand des Antriebsstrangs durchgeführt wird.

6. Verfahren nach einem der vorhergehenden Ansprüche, ferner umfassend den Schritt:
Vorhersage (S4, S5), ob eine Vorpositionierung des Antriebsstrangs mittels der bestimmten Höhe (8) und/oder Dauer des Drehmomentimpulses (3) zu einer Fahrzeugbewegung, einem Ruck und/oder Triebstrangschlag führen würde, und falls ja: keine Durchführung der Vorpositionierung, falls nein: Durchführung der Vorpositionierung (S6).

7. Verfahren nach einem der vorhergehenden Ansprüche, wobei die Vorpositionierung bei eingelegtem erstem Gang nur durchgeführt wird, falls die momentane Fahrzeugmasse einen vorbestimmten Schwellenwert überschreitet und/oder ein Bremspedal/Bremse betätigt ist.

8. Verfahren nach einem der vorhergehenden Ansprüche, wobei das Einleiten des Drehmomentimpulses bei der Vorpositionierung (S6) mittels einer Kupplungseinrichtung (20) oder eines elektrischen Motors erfolgt.

9. Verfahren nach einem der vorhergehenden Ansprüche, wobei ein Ende des ersten Abschnitts einem Drehmoment entspricht, das kleiner als ein Mindestdrehmoment ist, welches erforderlich ist, um eine Umpositionierung des Antriebsstrangs von der Schubseite auf die Zugseite auszulösen.

10. Steuervorrichtung (30) zum Betrieb eines Antriebsstrangs eines Kraftfahrzeugs beim Anfahren, insbesondere zur Reduzierung von Antriebsstrangschlägen beim Anfahren eines Kraftfahrzeugs, **dadurch gekennzeichnet, dass** die Steuervorrichtung (30) ausgebildet ist, das Verfahren gemäß einer der vorhergehenden Ansprüche durchzuführen.

11. Kraftfahrzeug (100), insbesondere Nutzfahrzeug, umfassend eine Steuervorrichtung (30) nach einem der vorhergehenden Ansprüche.

## Claims

1. Method for operating a drivetrain of a motor vehicle during drive-off, preferably for reducing drivetrain shocks during drive-off of a motor vehicle, comprising the following steps:
- prepositioning (S6) of the drivetrain (10) prior to drive-off of the motor vehicle by introducing a torque pulse (3) into the drivetrain (10) while the vehicle is at a standstill with running engine and engaged gear, and
- determining (S3) a magnitude (8) and/or a duration of the torque pulse in dependence
a) on an engaged gear stage;
and/or
b) on at least one of the following parameters: a mass of the motor vehicle, a temperature of the drivetrain, a presence or absence of a brake pedal actuation and/or a presence or absence of an engaged parking brake,
**characterized in that** the torque pulse (3) has a rising flank (4, 5) with a steep first section (4) and a subsequent second section (5) which is less steep compared with the first section (4).

2. Method according to claim 1, wherein the torque pulse (3) is dimensioned such that by its introduction mechanical play in the drivetrain is overcome and/or that the torque pulse does not generate a forward movement of the motor vehicle.

3. Method according to claim 1 or 2, further comprising the step:
after termination of the torque pulse, introducing (S7) a torque into the drivetrain for generating a drive-off movement of the motor vehicle.

4. Method according to one of the preceding claims, wherein the prepositioning is carried out:
a) after each stopping of the motor vehicle, as soon as vehicle standstill is reached and a gear is engaged; and/or
b) after each gear change at standstill; and/or
c) when shifting from neutral into a forward or reverse gear at standstill.

5. Method according to one of the preceding claims, wherein the prepositioning (S6) is carried out only when the drivetrain is in a warmed-up operating state.

6. Method according to one of the preceding claims, further comprising the step:
prediction (S4, S5), whether a prepositioning of the drivetrain by means of the determined magnitude (8) and/or duration of the torque pulse (3) would lead to a vehicle movement, a jerk and/or a drivetrain shock, and if yes: no carrying out of the prepositioning, if no: carrying out of the prepositioning (S6).

7. Method according to one of the preceding claims, wherein the prepositioning with engaged first gear is only carried out if the current vehicle mass exceeds a predetermined threshold value and/or a brake pedal / brake is actuated.

8. Method according to one of the preceding claims, wherein the introducing of the torque pulse (3) during the prepositioning (S6) takes place by means of a clutch device (20) or an electric motor.

9. Method according to one of the preceding claims, wherein an end of the first section corresponds to a torque which is smaller than a minimum torque which is required to trigger a repositioning of the drivetrain from the thrust side to the traction side.

10. Control device (30) for operating a drivetrain of a motor vehicle during drive-off, preferably for reducing drivetrain shocks during drive-off of a motor vehicle, **characterized in that** the control device (30) is configured to carry out the method according to one of the preceding claims.

11. Motor vehicle (100), preferably a commercial vehicle, comprising a control device (30) according to one of the preceding claims.

## Revendications

1. Procédé pour faire fonctionner une chaîne cinématique d'un véhicule automobile lors du démarrage, notamment en vue de réduire les à-coups de la chaîne cinématique lors du démarrage d'un véhicule automobile, comprenant les étapes suivantes :
- prépositionnement (S6) de la chaîne cinématique (10) avant le démarrage du véhicule automobile par introduction d'une impulsion de couple (3) dans la chaîne cinématique (10) à l'arrêt du véhicule avec le moteur qui tourne et un rapport engagé, et
- détermination (S3) d'une hauteur (8) et/ou d'une durée de l'impulsion de couple en fonction
a) d'un rapport engagé ;
et/ou
b) d'au moins l'un des paramètres suivants : une masse du véhicule automobile, une température de la chaîne cinématique, une présence ou une absence d'un actionnement de la pédale de frein et/ou une présence ou une absence d'un frein de stationnement serré, **caractérisé en ce que** l'impulsion de couple (3) présente un front montant (4, 5) avec une première portion (4) raide et une deuxième portion (5) suivante, moins raide en comparaison de la première portion (4).

2. Procédé selon la revendication 1, l'impulsion de couple (3) étant dimensionnée de telle sorte que son introduction permet de surmonter le jeu mécanique dans la chaîne cinématique et/ou que l'impulsion de couple ne génère aucun mouvement vers l'avant du véhicule automobile.

3. Procédé selon la revendication 1 ou 2, comprenant en outre l'étape suivante :
après la fin de l'impulsion de couple, introduction (S7) d'un couple dans la chaîne cinématique afin de générer un mouvement de démarrage du véhicule automobile.

4. Procédé selon l'une des revendications précédentes, le prépositionnement étant effectué :
a) après chaque arrêt du véhicule automobile, dès que l'immobilisation du véhicule est atteinte et qu'un rapport est engagé ; et/ou
b) après chaque changement de rapport à l'arrêt ; et/ou
c) lors du passage du point mort à un rapport de marche avant ou de marche arrière à l'arrêt.

5. Procédé selon l'une des revendications précédentes, le prépositionnement (S6) n'étant effectué que lorsque la chaîne cinématique est à température de service.

6. Procédé selon l'une des revendications précédentes, comprenant en outre l'étape suivante :
prédiction (S4, S5) si un prépositionnement de la chaîne cinématique au moyen de la hauteur déterminée (8) et/ou de la durée de l'impulsion de couple (3) entraînerait un mouvement du véhicule, une secousse et/ou un choc sur les organes d'entraînement, et si oui : pas d'exécution du prépositionnement, si non : exécution du prépositionnement (S6).

7. Procédé selon l'une des revendications précédentes, le prépositionnement avec le premier rapport engagé n'étant effectué que si la masse momentanée du véhicule dépasse une valeur de seuil prédéterminée et/ou si une pédale de frein/un frein est actionné(e).

8. Procédé selon l'une des revendications précédentes, l'introduction de l'impulsion de couple lors du prépositionnement (S6) s'effectuant au moyen d'un dispositif d'embrayage (20) ou d'un moteur électrique.

9. Procédé selon l'une des revendications précédentes, une extrémité de la première portion correspondant à un couple qui est inférieur à un couple minimal, lequel est nécessaire pour déclencher un repositionnement de la chaîne cinématique du côté poussée vers le côté traction.

10. Arrangement de commande (30) pour faire fonctionner une chaîne cinématique d'un véhicule automobile lors du démarrage, notamment en vue de réduire les à-coups de la chaîne cinématique lors du démarrage d'un véhicule automobile, **caractérisé en ce que** l'arrangement de commande (30) est configuré pour mettre en œuvre le procédé selon l'une des revendications précédentes.

11. véhicule automobile (100), notamment véhicule utilitaire, comprenant un arrangement de commande (30) selon l'une des revendications précédentes.
